# EUROPEAN PATENT APPLICATION

(11) **EP 3 364 656 A1**
(43) Date of publication of application: **22.08.2018**
(21) Application number: 17305168.1
(22) Date of filing: 15.02.2017
(51) Int. Cl.: H04N 19/70, H04N 19/82, H04N 19/463

(54) **METHOD FOR SAMPLE ADAPTIVE OFFSET CODING**

(71) Applicant: Thomson Licensing, 92130 Issy-les-Moulineaux (FR)
(72) Inventor: BORDES, Philippe, 35576 Cesson-Sévigné Cedex (FR); POIRIER, Tangi, 35576 Cesson-Sévigné Cedex (FR); RACAPE, Fabien, 35576 Cesson-Sévigné Cedex (FR)
(74) Representative: Huchet, Anne

(57) **Abstract**

A decoding method is disclosed. The decoding method comprises :
- decoding a block of a picture slice from a bitstream;
- decoding an absolute value of an offset from said bitstream;
- filtering said decoded block by adding said offset to a sample of said decoded block;
wherein said absolute value of said offset is dequantized after decoding by a quantization step size whose value is a non-decreasing function of a quantization parameter of said picture slice or of a quantization parameter of said block of said picture slice.

## Description

### 1. TECHNICAL FIELD

The present principles generally relate to a method and a device for picture encoding and decoding, and more particularly, to a method and a device for picture encoding and decoding with in-loop filtering, e.g. with sample adaptive offset filtering.

### 2. BACKGROUND ART

To achieve high compression efficiency, video coding schemes usually employ prediction and transform to leverage spatial and temporal redundancy in the video content. Generally, intra or inter prediction is used to exploit the intra or inter frame correlation, then the differences between group of samples in the original picture and in the predicted picture, often denoted as residuals, are transformed, quantized and entropy coded. To reconstruct the video, the compressed data is decoded by inverse processes corresponding to the prediction, transform, quantization and entropy coding.

Traditional video coding scheme include in-loop filtering processes for improving the quality of the reconstructed pictures. In-loop filtering may comprise Deblocking Filtering (DF) possibly followed by Sample Adaptive Offset (SAO) filtering as in HEVC, and/or Adaptive Loop Filtering (ALF) such as Wiener filters. The Sample Adaptive Offset filtering process is described in section 8.7.3 of the document ITU-T H.265 entitled "High Efficiency Video Coding" (version of April 2015). The SAO filtering comprises adding offsets to some reconstructed samples in order to reduce coding artifacts, e.g. ringing or banding artifact. Two types of filtering may be performed when the SAO filtering is enabled (or activated): Edge Offset (EO) type or Band Offset (BO) type. The SAO filtering reduces sample distortion by first classifying the samples of one CTB (Coding Tree Block) into multiple categories and adding a specific offset to each sample depending on its category. The SAO parameters (such as the offsets) for each color component are thus determined on the encoder side and possibly explicitly encoded at a CTU (Coding Tree Unit) level.

In the case where offsets are explicitly encoded in a bitstream, the absolute values of the offsets are encoded first. Then their signs may be encoded as in the case of BO type. In the case of EO type, the signs are inferred from the category. In HEVC, the absolute values of the offsets are encoded by Variable Length Coding (VLC). The binary codes of the VLC are defined such that the number of bits used to encode an absolute offset value increases with the absolute value of the offset. Moreover, some experiments have shown that the absolute values of the offsets tend to increase with the value of the quantization parameter QP used to quantize the samples.

Consequently, if QP is increased to reduce the bit rate, the values of the offsets to be encoded increase and the coding cost of the offset syntax elements and thus the bit rate also increases which is contrary to the initial objective of reducing the bit rate.

### 3. BRIEF SUMMARY

A decoding method is disclosed that comprises :
- decoding a block of a picture from a bitstream;
- decoding an absolute value of an offset from said bitstream;
- de-quantizing said decoded absolute value of said offset by a current quantization step size whose value is a non-decreasing function of a quantization parameter of said picture slice or of a quantization parameter of said block of said picture slice; and
- filtering said decoded block by adding said offset to a sample of said decoded block.

A decoding device is disclosed that comprises :
- means for decoding a block of a picture slice from a bitstream;
- means for decoding an absolute value of an offset from said bitstream;
- means for de-quantizing said decoded absolute value of said offset by a current quantization step size whose value is a non-decreasing function of a quantization parameter of said picture slice or of a quantization parameter of said block of said picture slice; and
- means for filtering said decoded block by adding said offset to a sample of said decoded block.

A decoding device is also disclosed that comprises a communication interface configured to access at least a bitstream and at least one processor configured to:
- decode a block of a picture slice from said accessed bitstream;
- decode an absolute value of an offset from said accessed bitstream;
- de-quantize said decoded absolute value of said offset by a current quantization step size whose value is a non-decreasing function of a quantization parameter of said picture slice or of a quantization parameter of said block of said picture slice; and
- filter said decoded block by adding said de-quantized offset to a sample of said decoded block.

The following embodiments apply to the decoding method and decoding devices disclosed above.

According to a specific characteristic, filtering uses a sample adaptive offset filter.

In a specific embodiment, the current quantization step size is a non-decreasing function, e.g. an increasing function, of a quantization parameter of said block of said picture slice.

In a specific embodiment, the de-quantized absolute offset value is equal to (QWeight x qoffset) » QShift, where qoffset is the decoded absolute offset value, QShift and QWeight are functions of a quantization step of the slice.

According to a specific characteristic, QShift and QWeight are integer piecewise linear functions of a quantization step of the slice.

According to a specific characteristic, QShift and QWeight are encoded in the bitstream.

In a specific embodiment, the quantization step size is further a function of at least one of:
- picture type;
- color component type;
- Sample Adaptive Offset filtering modes ; and
- Sample Adaptive Offset filtering category.

An encoding method is disclosed that comprises:
- encoding a block of a picture slice in a bitstream and reconstructing said block;
- quantizing and de-quantizing an absolute value of an offset by a current quantization step size whose value is a non-decreasing function of a quantization parameter of said picture slice or of a quantization parameter of said block of said picture slice;
- filtering said reconstructed block by adding said de-quantized offset to a sample of said reconstructed block; and
- encoding said quantized absolute value of said offset into said bitstream.

An encoding device is disclosed that comprises:
- means for encoding a block of a picture slice in a bitstream and reconstructing said block;
- means for quantizing and de-quantizing an absolute value of an offset by a current quantization step size whose value is a non-decreasing function of a quantization parameter of said picture slice or of a quantization parameter of said block of said picture slice;
- means for filtering said reconstructed block by adding said de-quantized offset to a sample of said reconstructed block; and
- means for encoding said quantized absolute value of said offset into said bitstream.

An encoding device is disclosed that comprises a communication interface configured to access at least an encoded block of a picture slice and at least one processor configured to:
- encode a block of a picture slice in a bitstream and reconstructing said block;
- quantize and de-quantize an absolute value of an offset by a current quantization step size whose value is a non-decreasing function of a quantization parameter of said picture slice or of a quantization parameter of said block of said picture slice;
- filter said reconstructed block by adding said de-quantized offset to a sample of said reconstructed block; and
- encode said quantized absolute value of said offset into said bitstream.

A bitstream is also disclosed that comprises coded data representative of a block of a picture slice, coded data representative of an absolute value of an offset quantized by a current quantization step size whose value is a non-decreasing function of a quantization parameter of said picture slice or of a quantization parameter of said block of said picture slice, wherein said block once decoded is to be filtered by adding an offset to a sample of said decoded block, wherein an absolute value of said offset is equal to a de-quantized version of said quantized absolute value.

A non-transitory processor readable medium having stored thereon a bitstream is disclosed, wherein the bitstream comprises :
coded data representative of a block of a picture slice;
coded data representative of an absolute value of an offset quantized by a current quantization step size whose value is a non-decreasing function of a quantization parameter of said picture slice or of a quantization parameter of said block of said picture slice,
wherein said block once decoded is to be filtered by adding an offset to a sample of said decoded block, wherein an absolute value of said offset is equal to a de-quantized version of said quantized absolute value.

A transmitting method is disclosed that comprises
- transmitting coded data representative of a block of a picture slice;
- transmitting coded data representative of an absolute value of an offset quantized by a current quantization step size whose value is a non-decreasing function of a quantization parameter of said picture slice or of a quantization parameter of said block of said picture slice,
wherein said block once decoded is to be filtered by adding an offset to a sample of said decoded block, wherein an absolute value of said offset is equal to a de-quantized version of said quantized absolute value.

A transmitting device is disclosed that comprises a communication interface configured to access a block of a picture slice and at least one processor configured to:
- transmit coded data representative of said accessed block;
- transmit coded data representative of an absolute value of an offset quantized by a current quantization step size whose value is a non-decreasing function of a quantization parameter of said picture slice or of a quantization parameter of said block of said picture slice,
wherein said block once decoded is to be filtered by adding an offset to a sample of said decoded block, wherein an absolute value of said offset is equal to a de-quantized version of said quantized absolute value.

The following embodiments apply to the encodingmethod, coding devices, bitstream, processor readable medium, transmitting method and transmitting devices disclosed above.

According to a specific characteristic, filtering uses a sample adaptive offset filter.

In a specific embodiment, said current quantization step size is a non-decreasing function, e.g. an increasing function, of a quantization parameter of said block of said picture slice.

In a specific embodiment,the dequantized absolute offset value is equal to (QWeight x qoffset) » QShift, where qoffset is the decoded absolute offset value, QShift and QWeight are functions of a quantization step of the slice.

According to a specific characteristic, QShift and QWeight are integer piecewise linear functions of a quantization step of the slice.

According to a specific characteristic, QShift and QWeight are encoded in the bitstream.

In a specific embodiment, said quantization step size is further a function of at least one of:
- picture type;
- color component type;
- Sample Adaptive Offset filtering modes ; and
- Sample Adaptive Offset filtering category.

### 4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder adapted to execute the encoding method according to the present principles;
- Figure 3 is a pictorial example illustrating four 1-D directional patterns for EO (Edge Offset) sample classification;
- Figure 4 is a pictorial example illustrating BO (Band Offset) with the associated starting band position and offsets of four consecutive bands;
- Figure 5 represents a flowchart of a method for encoding a picture block in a bitstream according to a specific and non-limiting embodiment;
- Figure 6 represents an exemplary architecture of a receiver configured to decode a picture from a bitstream according to a specific and non-limiting embodiment;
- Figure 7 illustrates a block diagram of an exemplary video decoder adapted to execute the decoding method according to the present principles; and
- Figure 8 represents a flowchart of a method for decoding a picture from a bitstream according to a specific and non-limiting embodiment.

### 5. DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

A picture is an array of luma samples in monochrome format or an array of luma samples and two corresponding arrays of chroma samples in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display. We may also use the terms "image," "picture," and "frame" interchangeably.

Various embodiments are described with respect to the HEVC standard. However, the present principles are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a slice. They may be applied to encode/decode a whole picture or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

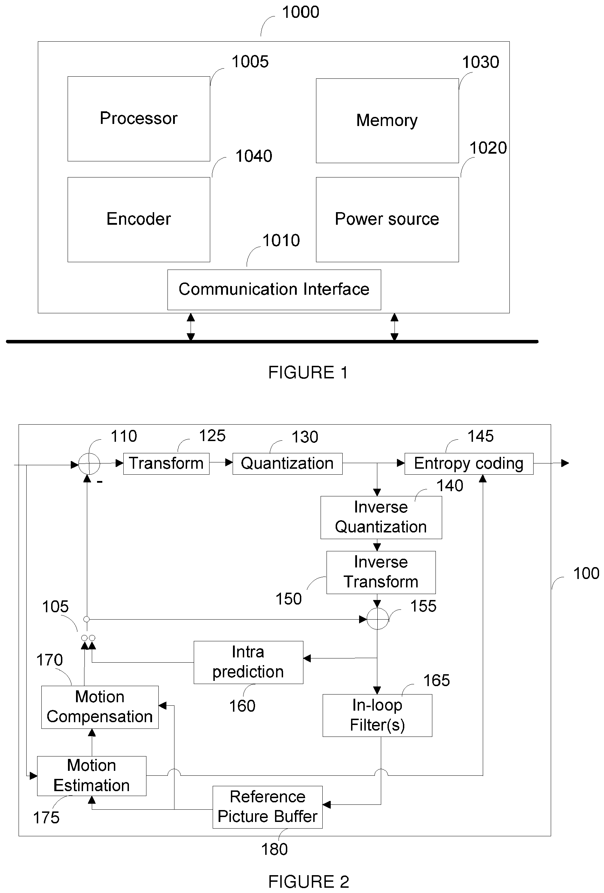

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.

The picture may be obtained from a source. According to different embodiments, the source can be, but is not limited to:
- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

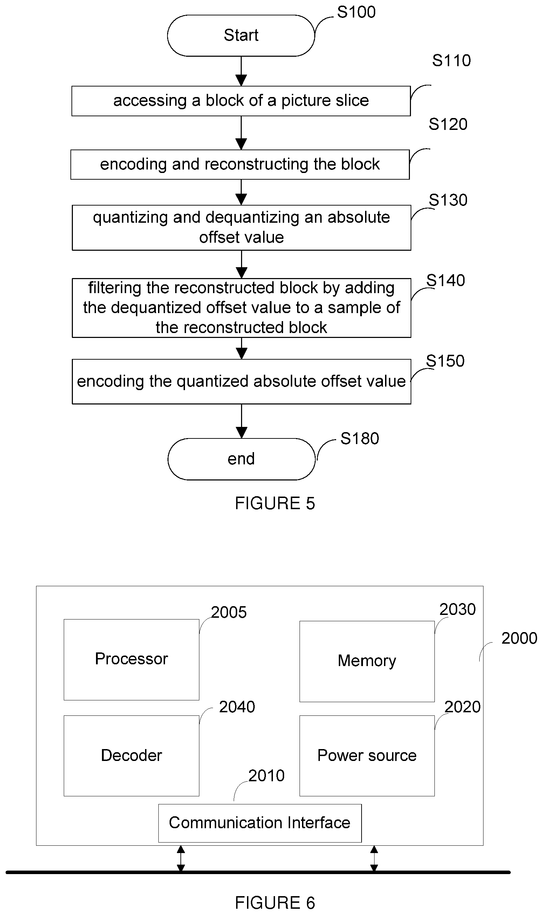

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to Figure 5. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:
- a mobile device ;
- a communication device ;
- a game device ;
- a tablet (or tablet computer) ;
- a laptop ;
- a still picture camera;
- a video camera ;
- an encoding chip or encoding device/apparatus;
- a still picture server ; and
- a video server (e.g. a broadcast server, a video-on-demand server or a web server).

**Figure 2** illustrates an exemplary video encoder 100, e.g. a HEVC video encoder, adapted to execute the encoding method of figure 5. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of basic coding units is grouped into a slice. A basic coding unit contains the basic coding blocks of all color components. Usually, the basic coding blocks are of square shape of 2ⁿx2ⁿ samples, where n is an integer, e.g. n ∈ {4, 5, 6}. In HEVC, the smallest coding tree block (CTB) size 16x16 for luma corresponds to a macroblock size as used in previous video coding standards. It will be understood that, although the terms CTU and CTB are used herein to describe encoding/decoding methods and encoding/decoding apparatus, these methods and apparatus should not be limited by these specific terms that may be worded differently (e.g. macroblock) in other standards such as H.264.

In HEVC, a CTB is the root of a quadtree partitioning into Coding Blocks (CB), and a Coding Block is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. Depending on the chroma sub-sampling, the CB size can be different for luma and chroma. In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264 or in other video coding standards, and more generally to refer to an array of samples of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted sample block (also known as a predictor) from the original picture block.

CUs in intra mode are predicted from reconstructed neighboring samples within the same slice. A set of 35 intra prediction modes is available in HEVC, including a DC, a planar and 33 angular prediction modes. The intra prediction reference is reconstructed from the row and column adjacent to the current block. The reference extends over two times the block size in horizontal and vertical direction using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (i.e., motion vector and reference index) can be signaled in two methods, namely, "advanced motion vector prediction (AMVP)" and "merge mode". In AMVP, a video encoder or decoder assembles candidate lists based on motion vectors determined from already coded blocks. The video encoder then signals an index into the candidate lists to identify a motion vector predictor (MVP) and signals a motion vector difference (MVD). At the decoder side, the motion vector (MV) is reconstructed as MVP+MVD.

In the merge mode, a video encoder or decoder assembles a candidate list based on already coded blocks, and the video encoder signals an index for one of the candidates in the candidate list. At the decoder side, the motion vector and the reference picture index are reconstructed based on the signaled candidate.

In HEVC, the precision of the motion information for motion compensation is one quarter-sample for the luma component and one eighth-sample for the chroma components. A 7-tap or 8-tap interpolation filter is used for interpolation of fractional-sample sample positions, i.e., 1/4, 1/2 and 3/4 of full sample locations in both horizontal and vertical directions can be addressed for luma.

The residuals are transformed (125) and quantized (130). In HEVC, quantization consists of division by a quantization step size and inverse quantization consists of multiplication by the quantization step size. Similar to H.264, a quantization parameter is used to determine the quantization step size. The quantization parameter can take value from 0 to 51 for 8-bit video sequences. An increase of 1 in quantization parameter means an increase of the quantization step size by approximately 12% (i.e. 2^{1/6}). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.
The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted samples block. An in-loop filter (165) is applied to the reconstructed picture, for example, to perform deblocking/SAO (Sample Adaptive Offset) filtering to reduce coding artifacts. The filtered picture may be stored in a reference picture buffer (180) and used as reference for other pictures.

In HEVC, SAO filtering may be activated or de-activated at sequence level (e.g. in a Sequence Parameter Set), slice level and CTB level. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the samples of luma and chroma components, where the SAO mode is the same for Cb and Cr components. The SAO parameters (i.e. the offsets, the SAO types EO, BO and inactivated, the class in case of EO and the band position in case of BO) are configured individually for each color component.

In the case where SAO filtering is activated for a CTB, the samples in the CTB are categorized into NC categories, e.g. NC=5 in HEVC. For sample s in category c(s), the sample can be adjusted to s = s + off(c(s)), where off(n) is the offset value of category n. In HEVC, the offsets values of only 4 (=NC-1) categories are decoded from the bitstream, the other offset values being set to 0. For BO, absolute offset values and signs are decoded. For EO, only absolute offset values are decoded, the signs being inferred from the category (positive sign for categories 1 and 2, and negative sign for categories 3 and 4).

### Edge Offset

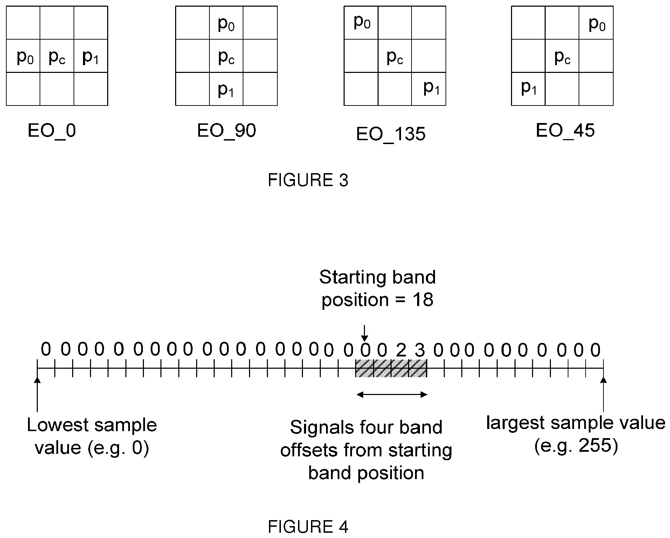

EO uses four 1-D directional patterns for sample classification: horizontal, vertical, 135° diagonal, and 45° diagonal, as shown in figure 3 where the label "p_{c}" represents a current sample and the labels "po" and "p₁" represent two neighboring samples. Four EO classes are specified based on the directions, and each EO class corresponds to one direction. The selected EO class, only one for each CTB that enables EO, is signaled in the bitstream as side information.

**TABLE 1**

| **Category** | **Condition** |
|---|---|
| 1 | p_{c} < p₀ and p_{c} < p₁ |
| 2 | (p_{c} < p₀ and p_{c} == p₁) or (p_{c} == p₀ and p_{c} < p₁) |
| 3 | (p_{c} > p₀ and p_{c} == p₁) or (p_{c} == p₀ and p_{c} > p₁) |
| 4 | p_{c} > p₀ and p_{c} > p₁ |
| 0 | None of the above |

For a given EO class, each sample inside the CTB is classified into one of five (NC = 5) categories based on local gradients. Specifically, the current sample value, labeled as "p_{c}," is compared with its two neighbors along the selected 1-D direction. The categorization rules for a sample are summarized in Table 1. Categories 1 and 4 are associated with a local valley and a local peak along the selected 1-D pattern, respectively, categories 2 and 3 are associated with concave and convex corners along the selected 1-D pattern, respectively. Positive offsets are used for categories 1 and 2, and negative offsets are used for categories 3 and 4.

If the current sample value does not belong to categories 1- 4 (i.e., the current sample value is the same as its two neighbors, or if p₀ < p_{c} < p₁ or p₀ > p_{c} > p₁), then it is in category 0 and SAO is not applied (i.e., offset is 0). For EO in HEVC, offsets for categories 1- 4 are encoded in addition to the EO class. More precisely, the absolute values of four offsets are signaled by the encoder, one absolute value for each category. The signs of the offsets are not encoded but implicitly derived from the corresponding EO categories.

### Band Offset

For BO, the range of sample values (for example, 0 - 255 for 8-bit samples) is uniformly split into 32 bands. One offset is added to all samples whose value belong to the same band. In HEVC, only offsets of (NC - 1) = 4 consecutive bands and the starting band position are signaled to the decoder as illustrated on figure 4. On this figure, the starting band is the eighteenth band and the encoded offsets value are {0, 0, 2, 3}. The starting band position indicates the position of the first band with an encoded offset. One offset is coded for each of the (NC - 1) bands and the remaining bands have an offset equal to zero. When the starting band position is close to the last band position, the offset values may correspond to non-consecutive bands since the bands are managed as a circular buffer. Note for BO, those four signaled bands can be considered as four categories, and the remaining bands can be considered as another category. In the present application, we use the terms "band" and "category" interchangeably. For BO in HEVC, offsets are encoded for four bands. More precisely, the absolute values of four offsets are signaled by the encoder, one absolute value for each of the 4 bands. The signs of the offsets are also signaled by the encoder.

**Figure 5** represents a flowchart of a method for encoding a picture block in a bitstream according to a specific and non-limiting embodiment.

The method starts at step S100. At step S110, a transmitter 1000, e.g. such as the encoder 100, accesses a block of a picture slice. At step S120, the transmitter encodes and reconstructs the accessed block in order to obtain a reconstructed block. Encoding a block usually but not necessarily comprises subtracting a predictor from the block to obtain a block of residuals, transforming the block of residuals into a block of transform coefficients, quantizing the coefficients with a quantization step size corresponding to a quantization parameter QP to obtain a quantized block of transform coefficients and entropy coding the quantized block of transform coefficients in the bitstream. Reconstructing a block on the encoder side usually but not necessarily comprises de-quantizing and inverse transforming the quantized block of transform coefficients to obtain a block of residuals and adding the predictor to the block of residuals to obtain a decoded block.

At step S130, an absolute value of a filter offset is quantized and further dequantized (inverse quantized being a synonym) by a quantization step size Q_{SAO} whose value is a non-decreasing function of a current quantization parameter of the picture slice. The current quantization parameter of the picture slice may be the quantization parameter of the slice itself, e.g. SliceQp_{Y} in HEVC (equation (7-52) in the document ITU-T H.265 (version of April 2015)) or the quantization parameter QP of the block, e.g. QP_{Y} in HEVC (equation (8-255) in the document ITU-T H.265 (version of April 2015)), used for quantizing the current block at step S120.

The filter offset value(s) (i.e. the offset absolute value(s) and possibly their sign(s)) may be obtained by various methods. As an example, they may be obtained by the following method. For each CTU and for each SAO mode (e.g. OFF, BO(i=band position), EO_0, EO_90, EO_45 and EO_135(i=valley, peak, half-valley, half-peak)), statistics are collected and stored into an array stats[ ctu ][ c ], where ctu is the CTU raster scan index in the slice, "c" is the category. Each cell of this array contains (Sum[i], Cpt[i]) values, where Sum(i) is the sum of the differences ( reconstructed_sample[x] - original_sample[x]), x being in category « i » and Cpt(i) is the number of samples that belong to this category. The offset is equal to a_{c}(i) = Sum(i) / Cpt(i). The distortion before filtering is denoted ε_{rec}. The distortion after filtering is denoted (ε_{rec} + dε_{AO}). The category c that minimizes the cost dε_{AO} + λ*rate(c) is selected where « rate(c) » is the number of bits used for coding the offsets a_{c}(i) (absolute value and possibly sign) and the SAO mode and X is a Lagrangian multiplier.

Another example of a method for determining filter offset value(s) is described in section II-D of the document from Fu et al entitled "Sample Adaptive Offset for HEVC" published in 2011 in IEEE 13th International Workshop on Multimedia Signal Processing. It will be appreciated, however, that the present principles are not restricted to any of these methods for determining the offset values and possibly their signs.

In one embodiment, the quantized absolute offset value sao_qoffset_abs[i] is equal to sao_offset_abs [i] / Q_{SAO} where sao_offset_abs[i] is the absolute offset value and i is the index of the offset value. Usually, i varies from 0 to (NC-1). The de-quantized absolute value of the offset is equal to sao_qoffset_abs[i] x Q_{SAO}.

In another specific embodiment, the quantized absolute value sao_qoffset_abs[i] of the offset sao_offset_abs[i] is equal to (sao_offset_abs[i]<<saoQShift(QP))/ saoQWeight(QP), where sao_offset_abs is the absolute offset value, saoQShift() and saoQWeight() are functions of a quantization parameter of the slice, e.g. QP. The de-quantized absolute value of the offset is equal to (saoQWeight(QP) x sao_offset_abs[i] )>> saoQShift(QP). In this embodiment, Qsao= saoQWeight(QP)>> saoQShift(QP).

An example of such integer piecewise linear functions saoQWeight() and saoQShift() is illustrated by Table 2.

**TABLE 2**

| QP | saoQWeight(Qp) | saoQShift(Qp) | Qsao |
|---|---|---|---|
| ... | ... | ... | |
| 37 | 5 | 1 | 2.5 |
| ... | ... | ... | |
| 32 | 3 | 1 | 1.5 |
| ... | ... | ... | |
| 27 | 5 | 2 | 1.25 |
| ... | ... | ... | |
| 22 | 5 | 2 | 1.25 |

The values in-between Qp={22,27,32,37} may be interpolated (integer piecewise linear for example). Indeed, the values of saoQWeight(Qp) and saoQShift(Qp) are necessarily integer values.
saoQWeight() and saoQShift() may be pre-defined or encoded in the bitstream for example in the form of a look-up table.

In other embodiments, saoQWeight() and saoQShift() are further function of at least one of a picture type (Intra or Inter); a color component type (Y, Cb or Cr);a filtering modes (such as for example SAO modes EO or BO); and a filtering category (such as for example SAO class defined by the syntax element sao_eo_class).

An example of such piecewise linear functions saoQWeight() and saoQShift() function of color component type is illustrated by Table 3.

**TABLE 3**

| QP | Y | | Cb, Cr | |
|---|---|---|---|---|
| | saoQWeight(Qp) | saoQShift(Qp) | saoQWeight(Qp) | saoQShift(Qp) |
| ... | ... | ... | ... | ... |
| 37 | 5 | 1 | 5 | 2 |
| ... | ... | ... | ... | ... |
| 32 | 3 | 1 | 3 | 2 |
| ... | ... | ... | ... | ... |
| 27 | 5 | 2 | 5 | 3 |
| ... | ... | ... | ... | ... |
| 22 | 5 | 2 | 5 | 3 |

In another example, saoQWeight() and saoQShift() are functions of filtering mode such that sao_offset_abs[i] is more coarsely quantized for BO than for EO. In another example, saoQWeight() and saoQShift() are functions of picture type such that sao_offset_abs[i] is more severely quantized for Inter than for Intra pictures.

At step S140, the reconstructed block is filtered by adding an offset value to a sample of the reconstructed block depending on its category, wherein the absolute value of the offset is the de-quantized absolute offset value obtained at step S130. More precisely, for sample s with category c(s), the sample can be adjusted to s = s + off(c(s)), where off(n) is the offset value of category n whose absolute value is the de-quantized absolute offset value obtained at step S130. To this aim Sample Adaptive Offset filtering as defined with respect to figures 3 and 4 may be used. It will be understood that, although the term SAO filter(ing) is used herein to describe encoding/decoding methods and encoding/decoding apparatus, these methods and apparatus should not be limited by SAO filtering. Any other filter that add an offset value to reconstructed luma and/or chroma samples of a block may be used according to the present principles. The filter according to the present principles may be used together with deblocking filter as in HEVC, and may also be used with other filters, or may be used alone.

At step S150, the quantized absolute value of the offset is encoded into the bitstream. In HEVC, the absolute values of the offsets are encoded using Variable Length Coding using table 4 defined for a bitdepth of 10.

**TABLE 4**

| **Absolute offset value** | **Binary Code value** | **Number of bins** |
|---|---|---|
| 0 | 0 | 1 |
| 1 | 10 | 2 |
| 2 | 110 | 3 |
| 3 | 1110 | 4 |
| ... | ... | ... |
| 30 | 111 ... 10 | 31 |
| 31 (cMax) | 111 ... 11 | 31 |

The value of cMax is "(1<< (Min(bitDepth,10)-5))-1", where "bitDepth" is the internal bit depth.

According to the present principle, the maximum absolute offset value is set equal to cMax/Q_{SAO} or is set equal to (cMax« saoQShift()) / saoQWeight()). More generally, cMax is quantized in the same manner as the absolute offset value is quantized to obtain the maximum absolute value.

In an optional step, a sign is also encoded in the bitstream in addition to the quantized absolute value. In another optional step, a filtering mode, e.g. indicating whether the filtering mode is EO or BO, may be encoded. In the case of BO filtering mode, a starting band position may be encoded in addition to quantized absolute values of offsets and signs. In the case of EO filtering mode, an EO class may be encoded in addition to quantized absolute values of offsets.
The method ends at step S180.

**Figure 6** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:
- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

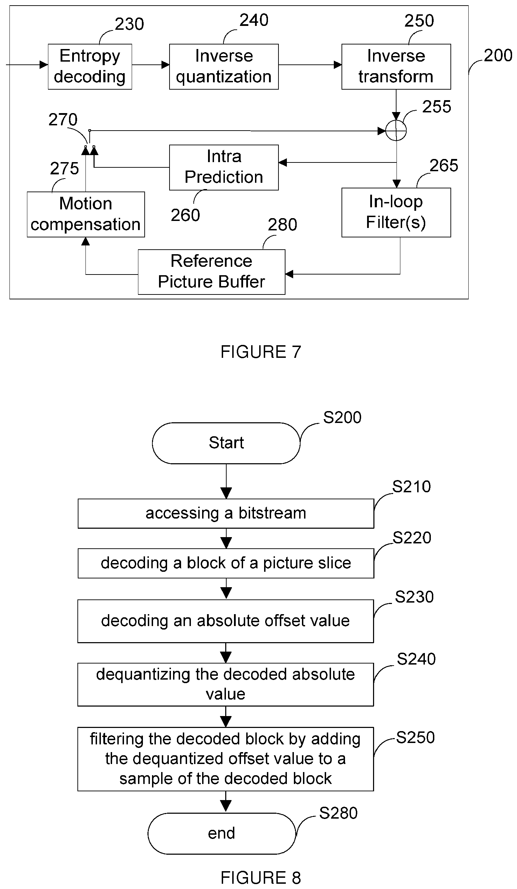

According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to Figure 8. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:
- a mobile device ;
- a communication device ;
- a game device ;
- a set top box;
- a TV set;
- a tablet (or tablet computer) ;
- a laptop ;
- a video player, e.g. a Blu-ray player, a DVD player;
- a display and
- a decoding chip or decoding device/apparatus.

**Figure 7** illustrates a block diagram of an exemplary video decoder 200, e.g. an HEVC video decoder, adapted to execute the decoding method of figure 8. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted sample block (also known as a predictor) to obtain a decoded/reconstructed picture block. The predicted sample block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the reconstructed picture. The in-loop filter may comprise a deblocking filter and a SAO filter. The filtered picture is stored at a reference picture buffer (280).

**Figure 8** represents a flowchart of a method for decoding a picture from a bitstream according to a specific and non-limiting embodiment.
The method starts at step S200. At step S210, a receiver 2000 such as the decoder 200 accesses a bitstream. At step S220, the receiver decodes at least one block of a picture slice from the bitstream. Decoding a block usually but not necessarily comprises entropy decoding a portion of the bitstream representative of the block to obtain a block of transform coefficients, de-quantizing and inverse transforming the block of transform coefficients to obtain a block of residuals and adding a predictor to the block of residuals to obtain a decoded block.

At step S230, an absolute value of at least one offset is decoded from the bitstream. In an optional step, a sign is also decoded from the bitstream in addition to the quantized absolute value. In another optional step, a filtering mode, e.g. indicating whether the filtering mode is EO or BO, may be decoded. In the case of BO filtering mode, a starting band position may be decoded in addition to quantized absolute values of offsets and signs. In the case of EO filtering mode, an EO class may be decoded in addition to quantized absolute values of offsets.

At step S240, the decoded absolute value is dequantized by a quantization step size Q_{SAO} whose value is a non-decreasing function of a quantization parameter of the picture slice. In a specific embodiment, the quantization step size is a non-decreasing function of a quantization parameter QP used for dequantizing the block at step S220. In a specific embodiment, the de-quantized absolute value of the offset is equal to sao_qoffset_abs[i] x Q_{SAO}.
In another specific embodiment, the de-quantized absolute value of the offset is equal to (saoQWeight(Qp) x sao_qoffset_abs[i]) >> saoQShift(Qp). In this embodiment, Qsao= saoQWeight(QP)>> saoQShift(QP)..

At step S250, the decoded block is filtered by adding an offset value to a sample of the decoded block depending on its category, wherein the absolute value of the offset is the de-quantized absolute offset value obtained at step S240. More precisely, for sample s with category c(s), the sample can be adjusted to s = s + off(c(s)), where off(n) is the offset value of category n whose absolute value is the de-quantized absolute offset value obtained at step S240. To this aim Sample Adaptive Offset filtering as defined with respect to figures 3 and 4 may be used.
The method ends at step S280.
The embodiments and variants disclosed with respect to the encoding method and devices also apply to the decoding method and devices.

The present principles improves the performance of the overall video compression scheme. More precisely, offset based in-loop filter such as SAO filter is improved by reducing the coding cost of the offsets especially at low bit-rate.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A decoding method comprising :
- decoding a block of a picture slice from a bitstream;
- decoding an absolute value of an offset from said bitstream;
- de-quantizing said decoded absolute value of said offset by a current quantization step size whose value is a non-decreasing function of a quantization parameter of said picture slice or of a quantization parameter of said block of said picture slice; and
- filtering said decoded block by adding said de-quantized offset to a sample of said decoded block.

2. The method of claim 1, wherein filtering uses a sample adaptive offset filter.

3. The method of any one of claims 1 to 2, wherein the dequantized absolute offset value is equal to (QWeight x qoffset) >> QShift, where qoffset is the decoded absolute offset value, QShift and QWeight are functions of a quantization step of the slice.

4. The method of claim 3, wherein QShift and QWeight are integer piecewise linear functions of a quantization step of the slice.

5. The method of claim 3 or 4, wherein QShift and QWeight are encoded in the bitstream.

6. The method of any one of claims 1 to 5, wherein said quantization step size is further a function of at least one of:
- picture type;
- color component type;
- Sample Adaptive Offset filtering modes ; and
- Sample Adaptive Offset filtering category.

7. An encoding method comprising:
- encoding a block of a picture slice in a bitstream and reconstructing said block;
- quantizing and de-quantizing an absolute value of an offset by a current quantization step size whose value is a non-decreasing function of a quantization parameter of said picture slice or of a quantization parameter of said block of said picture slice;
- filtering said reconstructed block by adding said de-quantized offset to a sample of said reconstructed block; and
- encoding said quantized absolute value of said offset into said bitstream.

8. The method of claim 7, wherein filtering uses a sample adaptive offset filter.

9. The method of any one of claims 7 to 8, wherein the dequantized absolute offset value is equal to (QWeight x qoffset) >> QShift, where qoffset is the decoded absolute offset value, QShift and QWeight are functions of a quantization step of the slice.

10. The method of claim 9, wherein QShift and QWeight are integer piecewise linear functions of a quantization step of the slice.

11. The method of claim 9 or 10, wherein QShift and QWeight are encoded in the bitstream.

12. The method of any one of claims 7 to 11, wherein said quantization step size is further a function of at least one of:
- picture type;
- color component type;
- Sample Adaptive Offset filtering modes ; and
- Sample Adaptive Offset filtering category.
